# EUROPEAN PATENT APPLICATION

(11) **EP 1 215 685 A1**
(43) Date of publication of application: **19.06.2002**
(21) Application number: 01310387.4
(22) Date of filing: 12.12.2001
(51) Int. Cl.: H01B 3/44, C08K 3/00, C08L 53/00, C08L 23/10, C08J 3/22

(54) **Electrical wire having a covering of a resin composition**

(30) Priority: 12.12.2000 JP 2000377498; 26.03.2001 JP 2001087907
(71) Applicant: Sumitomo Wiring Systems, Ltd., Yokkaichi-City, Mie, 510-8503 (JP); Sumitomo Electric Industries, Ltd., Osaka (JP)
(72) Inventor: Hase, Tatsuya, 1-14 Nishisuehiro-cho Yokkaichi-ken, Mie (JP); Sugita, Takahiko, 1-14 Nishisuehiro-cho Yokkaichi-ken, Mie (JP); Fujimoto, Hiroshi, 1-14 Nishisuehiro-cho Yokkaichi-ken, Mie (JP); Sato, Masashi, 1-14 Nishisuehiro-cho Yokkaichi-ken, Mie (JP); Matsumoto, Shinichi, 1-14 Nishisuehiro-cho Yokkaichi-ken, Mie (JP)
(74) Representative: Paget, Hugh Charles Edward

(57) **Abstract**

An electrical wire suitable for use in a vehicle, has a conductor and an electrically insulating covering on the conductor. The covering is a resin composition comprising a first polymer, at least one second polymer and a filler in the form of filler particles. The first polymer has a higher bonding affinity to the filler particles than the second polymer or polymers whereby the filler particles have a surface coating of the first polymer and the surface-coated filler particles are embedded in a matrix of the second polymer or polymers. The filler is homogeneously dispersed and the covering has good properties.

## Description

### FIELD OF THE INVENTION

This invention relates to an electrical wire having a halogen-free resin composition as an electrically insulating covering on an electrical conductor core. Such an electrical wire is useful for example in a motor vehicle. The invention also relates to a method of making such a wire.

### DESCRIPTION OF THE PRIOR ART

Polyvinyl chloride has been much used as the covering material of electrical wire for an automobile, because it is superior in properties such as mechanical strength, extrusion processability, flexibility and colouring property. However, with recent concern for the global environment, halogen-free resin material has come to be used for the production of automobile parts including the covering of electrical wires in an automobile in place of polyvinyl chloride, because polyvinyl chloride discharges a harmful halogen gas on combustion.

A halogen-free resin composition in which a metal hydroxide is blended with a polyolefin-base polymer as a flame-retardant is known as a wear resistant resin composition having the merit of no generation of a poisonous gas such as a halogen gas on combustion (see JP-A-7-176219, JP-A-7-78518 and the like). In order that such a flame-retarding resin composition has a self-extinction property, a large quantity of a filler is required to be added, but this causes problems that mechanical strength such as the wear resistance, tensile strength and the like of the composition are much reduced.

Various fillers have been proposed for improving the properties of the resin composition. For example, metal oxides such as titanium oxide and the like are used as a pigment, metal hydroxides such as magnesium hydroxide, aluminum hydroxide and the like as mentioned above are added in order to impart flame resistance to the resin composition, calcium carbonate, talc, clay, silica and the like are used for increasing bulk, and a carbon fibre, a glass fibre, talc, mica and the like are added for reinforcement.

However, since the affinity of a polymer resin with a filler is typically not high, the filler particles become mutually coagulated often to form lumps of filler particles in a resin phase when the filler is compounded with the resin. Accordingly, it is difficult to achieve that the characteristic of the whole resin is homogenized by homogeneous distribution of the filler in the resin phase.

In order to try to prevent the coagulation of the filler in the resin composition, fillers whose surface is treated are usually employed. As surface-treating agents, a silane-based agent, titanate-based agent, aluminum-based agent, fatty acid-based oil and fat, wax, surfactant and the like are used. However, there occur problems of the lowering of mechanical strength, whitening of the wire covering on bending, and poor processing and the like.

### SUMMARY OF THE INVENTION

The object of the present invention is to provide an electrical wire having a resin composition covering in which a filler is homogeneously dispersed without coagulation and to provide a method for producing such a wire.

In a first aspect the invention provides an electrical wire having a conductor and an electrically insulating covering on the conductor, wherein the covering is a resin composition comprising a first polymer, at least one second polymer and a filler in the form of filler particles, wherein the first polymer has a higher bonding affinity to the filler particles than the second polymer whereby the filler particles have a surface coating of the first polymer and the surface-coated filler particles are embedded in a matrix of the second polymer.

In a second aspect the invention provides a method of making an electrical wire comprising the steps of
(i) forming a resin composition comprising a first polymer, at least one second polymer and a filler in the form of filler particles, wherein the first polymer has a higher bonding affinity to the filler particles than the second polymer whereby the filler particles have a surface coating of the first polymer and the surface-coated filler particles are embedded in a matrix of the second polymer, and
(ii) applying the resin composition to an electrical conductor to form an electrically insulating covering thereon,
wherein step (i) includes a mixing process selected from:-
(a) first kneading the filler particles and the first polymer to form a mixture thereof and thereafter kneading the mixture and the second polymer, and
(b) kneading the filler particles and the first and second polymers together at the same time.

In the present specification including the claims, the term "filler" is used to mean not only a mere filler, but also various additives (compounding agents) which have been conventionally added for improvement of a resin.

The filler used in the present invention may be either an inorganic filler or an organic filler, but an inorganic filler is preferred. Examples of the filler include a carbon material, and a metal oxide, a metal hydroxide, a metal carbonate, a metal sulfate, a metal silicate and a metal nitride (the metal being for example, alkali metal, alkaline earth metal, a transition metal and the like). These fillers can be used alone or as a mixture of two or more. Among them, a metal hydroxide, for example magnesium hydroxide, aluminum hydroxide or the like, is preferred in particular as the filler of a resin composition of an electric wire because a flame retarding property is provided. The resin composition is thus desirably a fire resistant composition. For this purpose, preferably no fibrous filler is present in the resin composition. Preferably a metal hydroxide, or mixture of metal hydroxides, is the only filler present.

The particles of the filler used in the present invention may be used untreated, but preferably their surface is treated with a coupling agent such as a silane coupling agent or a fatty acid or a salt of fatty acid before mixing with the polymers. Since the dispersibility of the filler is improved by the first polymer coating, the filler coated with a first polymer in accordance with the present invention can have a high dispersibility without surface-treatment by the coupling agent or the fatty acid. As the silane coupling agent, an aminosilane coupling agent, a vinylsilane coupling agent, an epoxysilane coupling agent, a methacryloxysilane coupling agent and the like can be exemplified. As the fatty acid or a salt thereof, higher fatty acids (e.g. having at least 12 carbon atoms) such as stearic acid, oleic acid and the like or a salt thereof can be exemplified.

The first polymer having bonding affinity with the filler, which is used for coating the particle surface of the filler is preferably a polymer having a functional group promoting binding to the filler particle surface. The functional group may be a carboxylic acid group (including carboxylic acid ester groups) or a carboxylic anhydride group, an epoxy group, a hydroxy group, an amino group, and the like. These functional groups can be introduced by polymerizing using a monomer having such a functional group, or graft-copolymerizing a monomer having the functional group on a skeleton polymer. The functional group should be present on the first polymer before the first polymer is mixed with the filler particles. A polymer having a carboxylic acid group or carboxylic acid anhydride group has a high affinity to an inorganic filler, in particular, to a metal hydroxide. For introducing a carboxylic acid group or a carboxylic anhydride group, a monomer having an unsaturated carboxylic acid group or its anhydride or its ester can be used, and specifically, maleic acid, fumaric acid, an anhydride thereof, a monoester or diester thereof and the like can be mentioned.

As a monomer to introduce an epoxy group, a compound having a glycidyl group (for example, methyl glycidyl ether, butyl glycidyl ether, phenyl glycidyl ether, and the like) can be exemplified.

The ratio of the monomer having the functional group to the total polymer is typically 0.01 to 30% by weight and preferably 0.1 to 10% by weight.

Various polymers can be used as the first polymer to which the functional group is introduced. Preferred examples are as follows:
a propylene homopolymer, a propylene block or random copolymer, a high density polyethylene (HDPE), a linear low density polyethylene (LLDPE), a low density polyethylene (LDPE), an ultra low density polyethylene, a polybutene, a polystyrene, an ethylene-vinyl acetate copolymer, an ethylene-ethyl acrylate copolymer, an ethylene-methyl acrylate copolymer, an ethylene-propylene rubber, an ethylene-butene rubber, an olefin-based elastomer (for example, a poly(propylene-ethylene/propylene) copolymer and the like), and a styrene-based thermoplastic elastomer (for example, a block copolymer having polystyrene segments and rubber segments (e.g. of polybutadiene (SBS, SBR) or polyisoprene (SIS,SER)or ethylene/butadiene) and a hydrogenated product (SEBS, HSBR, SEPS, HSIR) thereof).

Examples of the preferred polymers having good affinity with a filler which contain an acid anhydride group include an acid anhydride-modified ethylene-vinyl acetate copolymer, an acid anhydride-modified ethylene-ethyl acrylate copolymer, an acid anhydride-modified ethylene-propylene rubber, an acid anhydride-modified low density polyethylene, an acid anhydride-modified linear low density polyethylene, an acid anhydride-modified poly(propylene-ethylene/propylene) copolymer, an acid anhydride-modified styrene-butadiene rubber, and an acid anhydride-modified hydrogenated styrene-butadiene rubber, but are not limited to these.

In the case when such a polymer modified with a carboxylic acid group or a carboxylic acid anhydride group is used as the first polymer and a metal hydroxide is used as the filler, preferably the composition contains no component, other than the metal hydroxide, which reacts with the carboxylic acid or acid anhydride group. It is desired that the first polymer bonds directly to the metal hydroxide particles, during mixing or extrusion, to improve the mixing and dispersion of the metal hydroxide particles in the composition.

The amount of the first polymer or polymers used may be suitably selected according to the filler, and is not specifically limited, but is preferably not more than 50% by weight and is typically in the range 3 to 40% by weight relative to the total polymer content of the resin composition. The amount of the second polymer or polymers is thus preferably at least 50%, more preferably 60 to 97% by weight.

The resin composition used in the present invention contains the filler coated with above-mentioned first polymer and the second polymer which is different from the first polymer. All polymers used in the resin composition are preferably halogen-free. There may be no other polymer components present, other than the first and second polymers. For example, when there is only a single first polymer and only a single second polymer present, these are the only two polymer components in the resin composition.

The second polymer is not specifically limited, and may be selected considering its compatibility with the first polymer and its use. For coating an electric wire, an olefin-based polymer is preferable as the second polymer. Examples include a propylene polymer (a homopolymer or a propylene random or block copolymer e.g. with ethylene), a polyethylene (a high density polyethylene, a linear low density polyethylene, a low density polyethylene, an ultra low density polyethylene and the like), a polybutene polymer, a polystyrene and a styrene copolymer, an ethylene copolymer (an ethylene-vinyl acetate copolymer, an ethylene-ethyl acrylate copolymer and the like), an olefin-based elastomer (a poly(propylene-ethylene/propylene) copolymer and the like), and a styrene-based elastomer (a styrene-butadiene block copolymer, a styrene-ethylene-propylene block copolymer, or a copolymer which is obtained by saturating by hydrogenation of unsaturated double bonds in these copolymers and the like). These polymers can be used alone or as a mixture of two or more. For processing reasons, a single second polymer is preferred.

When the first polymer is an acid anhydride-modified polymer, the preferred second polymer is a propylene polymer or an ethylene polymer or a propylene/ethylene copolymer.

As the propylene polymer, a propylene homopolymer and a propylene copolymer which contains propylene as a main component (50% by weight or more), for example, a propylene-ethylene block or random copolymer and the like, can be exemplified.

As the ethylene polymer, an ethylene homopolymer and an ethylene copolymer which contains ethylene as a main component (50% by weight or more), for example, an ethylene-vinyl acetate copolymer, an ethylene-ethyl acrylate copolymer, an ethylene-methyl methacrylate copolymer and the like, can be exemplified.

The resin composition used as a wire covering in the present invention can be produced by first mixing the filler with the first polymer. Alternatively, since the first polymer having high affinity with the filler preferentially surrounds the filler particles, the composition can be made by simultaneously mixing and kneading the filler, the first polymer and the second polymer.

Thus the production process for the resin composition used in the present invention is not specifically limited, but the resin composition may be produced by kneading the filler and the first polymer, and then by kneading the obtained mixture and the second polymer, or by simultaneously kneading the filler, the first polymer having good affinity with a filler and the second polymer. Since the first polymer has high affinity with the filler, it is more easily adhered to the filler particles than the second polymer. Therefore, a morphology in which the first polymer surrounds the filler particles and the second polymer fills up the space between the coated filler particles, namely a so-called spotted or island structure in which the second polymer is the "continuous phase" or matrix and the coated filler particles are "discontinuous phase" is formed. This morphology can be demonstrated by the electron microscope picture of the resin composition produced in an Example described later.

The proportion of the filler in the resin composition may be suitably selected according to the use of the resin composition, the kind of the first polymer and the second polymer, the kind of the filler and the like, and may be a conventional amount. However, the coated filler in the present invention has good dispersibility and is therefore homogeneously dispersed in the polymer, so that in suitable cases a larger quantity than a conventional compounding amount can be included, or a smaller amount for obtaining the same effect may be sufficient.

In addition to the filler, various compounding agents can be added to the resin composition used in the present invention, such as those conventional in an electric wire-coating resin material. Examples of the compounding agents include a thermal stabilizer (oxidation inhibitor and the like), a metal deactivator (copper inhibitor and the like), a lubricant (fatty acid-based lubricant, fatty acid amide-based lubricant, metal soap, hydrocarbon-based lubricant (wax), ester-based lubricant, silicone-based lubricant and the like), a coupling agent, a softening agent (process oil and the like), a crosslinking agent and the like. The resin composition of the present invention can be cross-linked, when it is desired to achieve high heat resistance. The crosslinking can be carried out by compounding a chemical crosslinking agent, but may be carried out by radiation (for example, ultraviolet rays, electron beam, and the like). Alternatively, the polymers of the resin composition may be not cross-linked. In this case there is present no cross-linking agent, such as a peroxide, and in the composition as applied as a wire covering there is no cross-linking agent nor decomposition product of a cross-linking agent.

A particularly preferred resin composition for the electric wire covering is one which contains (a) as the second polymer 60 to 97 parts by weight (preferably 70 to 90 parts by weight) of a polypropylene polymer as described above, (b) as the first polymer 3 to 40 parts by weight (preferably 10 to 30 parts by weight) of a polymer modified with 0.1 to 10% by weight of a monomer which contains a carboxylic acid group or an acid anhydride group (provided that the sum of (a) and (b) is 100 parts by weight), and (c) 30 to 200 parts (preferably 50 to 160 parts by weight) by weight of a metal hydroxide.

As (b) the polymer modified with a monomer which contains an acid anhydride group, an acid anhydride-modified ethylene-vinyl acetate copolymer, an acid anhydride-modified ethylene-ethyl acrylate copolymer, an acid anhydride-modified ethylene-propylene rubber, an acid anhydride-modified low density polyethylene, an acid anhydride-modified linear low density polyethylene, an acid anhydride-modified poly(propylene-ethylene/propylene) copolymer, an acid anhydride-modified styrene-butadiene rubber, an acid anhydride-modified hydrogenated styrene-butadiene rubber, acid anhydride-modified styrene-ethylene/butadiene rubbers, and acid anhydride-modified hydrogenated styrene-ethylene/butadiene rubbers and the like can be preferably used.

The application of the resin composition to an electrical conductor to form an electrically insulating covering of the wire may be preferred in a conventional manner, in particular by extrusion. Preferably, the conductor is covered with the composition to a thickness in the range 0.15 to 0.35 mm, more preferably 0.2 mm to 0.3 mm. If the coating thickness is less than 0.2 mm, the covered wire may have a reduced wear resistance, but may be satisfactory for some purposes. If the coating thickness is more than 0.3 mm, the covered wire may have a reduced flexibility, but may be satisfactory for some purposes.

### BRIEF INTRODUCTION OF THE DRAWINGS

Fig. 1 is a micrograph produced by an electron microscope showing the structure of the resin composition obtained in Example 1.

Fig. 2 is a micrograph produced by an electron microscope showing the structure of the resin composition obtained in Comparative Example 1.

### EXAMPLES

The present invention is specifically illustrated below, by non-limitative examples showing use of fire-resistant halogen-free resin compositions particularly as coverings of electrical wires.

In all of the examples below, the components were continuously mixed and kneaded as follows. The resin components and the metal hydroxide are fed simultaneously to the input hopper of a twin-shaft extruder having an electrical heating jacket. This extruder was employed to effect the kneading of the components together. The extruder temperature (inner surface) was 200°C. The strands produced pass through a water bath to a pelletizer, to make pellets of the composition. The pellets are used to make a wire covering as described below.

### Example 1

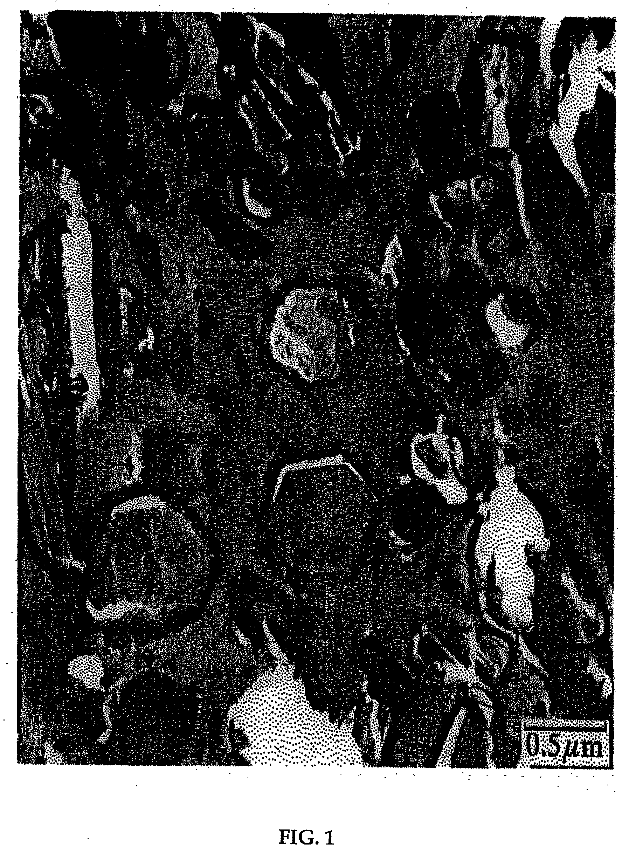

80 parts by weight of a block polymer PP which is a propylene-ethylene block copolymer of more than 50 wt% propylene (Polypro RB610A manufactured by Tokuyama Corporation; melt flow rate (MFR) 0.5 g/10 min. (230°C, a load of 2.16kg)), 20 parts by weight of MAH-SEBS (TUFTEC M1913 (trade name) manufactured by Asahi Kasei Corporation; a styrene-based thermoplastic elastomer obtained by hydrogenating the double bonds of a styrene-butadiene block copolymer to saturation and modifying it with maleic anhydride) and 90 parts by weight of magnesium hydroxide (untreated) were kneaded with a twin-screw extruder. The TEM of the composition obtained is shown in Fig. 1 and was photographed by the method below:-

Transmission electron microscope (TEM) H-800 manufactured by HITACHI, was used as the electron microscope, and a photograph was taken at an acceleration voltage of 100KV. First, the sample was cut to a thickness of about 10µm by a microtome for an electron microscope, and the cut sample was dyed with ruthenic acid (2% aqueous solution) for 2 hours. Then, the dyed sample was buried in an epoxy resin, and TEM was observed by an ultra thin intercept method.

In Fig. 1, for example, the approximately hexagonal particles which are situated at the central part of the picture and the surrounding narrow long particles are the particles of magnesium hydroxide, the dense portion at the periphery of the respective particles is the first polymer (hydrogenated styrene-butadiene elastomer modified with an acid anhydride) which coats the particles, and those filling the space between the particles are the continuous phase of the second polymer (polypropylene).

As can be seen in this micrograph, the filler particles hardly coagulate, and are finely dispersed in the continuous phase of the second polymer.

The resin composition of this example provides very satisfactory results when used as a covering of an electrical wire.

### Comparative Example 1

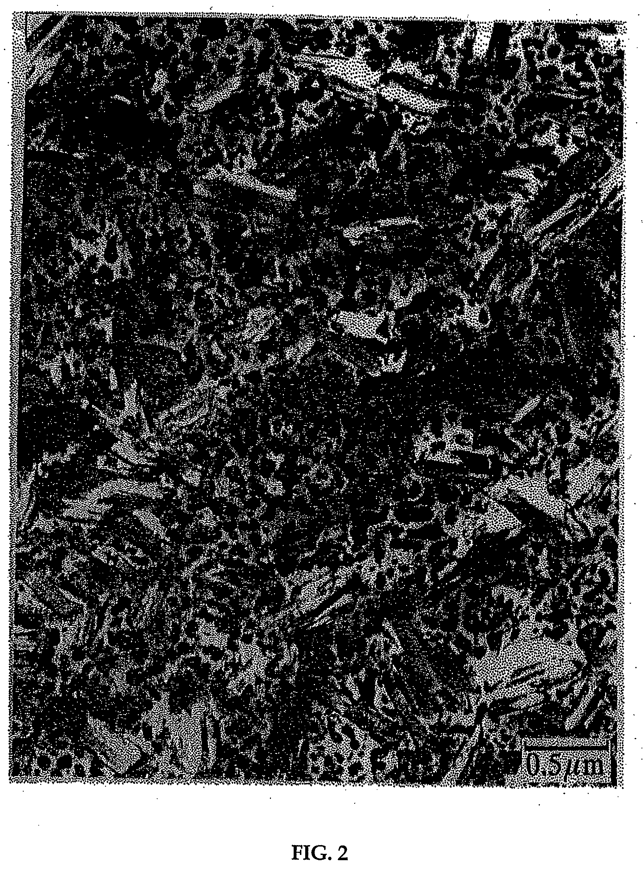

A composition was prepared in like manner as in Example 1 except for using an unmodified styrene-based elastomer which was obtained by hydrogenating the double bonds of SEBS (TUFTEC H1041 manufactured by Asahi Kasei Corporation; a styrene-butadiene block copolymer) to saturation, in place of MAH-SEBS. Its structure is shown in Fig. 2.

Comparison of Figs. 1 and 2 show that the styrene-based polymer modified by unsaturated carboxylic acid, by reason of its affinity with the magnesium hydroxide filler particles, forms the structure of the mixture in which it surrounds the particles preferentially. This is advantageous for the properties of the composition as a wire covering.

### Examples 2 to 41 and Comparative Examples 2 to 5

The components shown in Tables 1 to 8 are mixed at the amounts shown, and kneaded by a twin-screw extruder.

The resin composition obtained was extrusion -molded at a coating thickness of 0.28mm around a twisted wire conductor of 0.5mm² section (composed of 7 copper soft wires having a diameter of 0.32mm). Die nipples having diameters of 1.40mm and 0.88mm were used for extrusion molding. The extrusion temperature was 210 to 230°C for the die and 200 to 240°C for the cylinder, and the extrusion molding was carried out at a linear velocity of 50m/min.

Details of the components are as follows:
- Block copolymer PP: a propylene-ethylene block copolymer (Polypro RB610A manufactured by Tokuyama Corporation; melt flow rate (MFR) 0.5 g/10 min. (230°C, a load of 2.16kg)). Propylene content is above 50% by weight.
- MAH-EVA: an ethylene-vinyl acetate copolymer modified with maleic anhydride (HPR VR103 manufactured by Mitsui DuPont Chemical Co., Ltd.; density = 0.96; Shore A hardness 60; MFR 8 g/10 min. (190°C, a load of 2.16kg)).
- MAH-EEA: an ethylene-ethyl acrylate copolymer modified with maleic anhydride (HPR AR201 manufactured by Mitsui DuPont Chemical Co., Ltd.; density = 0.94; Shore A hardness 51; MFR 7 g/10 min.(190°C, a load of 2.16kg)).
- MAH-EPR: an ethylene-propylene rubber modified with maleic anhydride (T7741P manufactured by JSR Corporation; density = 0.86; Shore A hardness 57; MFR 0.9 g/10 min. (190°C, a load of 2.16kg)).
- MAH-LDPE: a low density polyethylene modified with maleic anhydride (ADOTEX ER510E manufactured by Japan Polyolefin Co., Ltd.; density = 0.91; Shore D hardness 47; MFR 2.2 g/10 min. (230°C, a load of 2.16kg)).
- MAH-LLDPE: a linear low density polyethylene modified with maleic anhydride (ADOTEX ER621F manufactured by Japan Polyolefin Co., Ltd.; density = 0.91; Shore D hardness 45; MFR 3.5 g/10 min. (230°C, a load of 2.16kg)).
- MAH-PP/EPR: a polymer of PP and EP (TOKUYAMA 310J manufactured by Tokuyama Corporation.; density = 0.88; Shore D hardness 28; melt flow rate (MFR)(230°C, a load of 2.16kg) = 1.5g/10min.) modified with 1% by mass of maleic anhydride.
- MAH-HSBR: a hydrogenated styrene-butadiene rubber (DYNARON 1320P (trade name) manufactured by JSR Corporation; density = 0.89; Shore A hardness 41; MFR 3.5 g/10 min.(230°C, a load of 2.16kg)) modified with 1% by weight of maleic anhydride.
- MAH-SEPS: a hydrogenated styrene-isoprene block copolymer (SEPTON (trade name) 2043 manufactured by Kuraray Co., Ltd.; density = 0.89; Shore A hardness 38; MFR 4 g/10 min. (230°C, a load of 2.16kg)) modified with 1% by weight of maleic anhydride.
- Magnesium hydroxide A: magnesium hydroxide treated with a vinyl silane coupling agent (manufactured by Kyowa Chemicals Co., Ltd.; average particle diameter = 1.0µm).
- Magnesium hydroxide B: magnesium hydroxide untreated (manufactured by Kyowa Chemicals Co., Ltd.; average particle diameter 1.0µm).
- Antioxidant: a hindered phenol-based antioxidant ("TOMINOX TT" (trade name) manufactured by Yoshitomi Fine Chemicals Ltd.).

The flame resistance, tensile strength/elongation, and wear resistance of the coated electric wire obtained in Examples 2 to 41 and Comparative Examples 2 to 5 were measured in accordance with JASO (Japan Automobile Standards Organisation) D 611-94. The test methods are as below.

### Flame resistance:

A test piece was made by cutting the coated electric wire to a length of 300mm. Then, each of the test pieces was put in a test box made of iron, and horizontally supported. Using a Bunsen burner having a calibre of 10mm, the edge of the flame was applied to the lower side of the central portion of the test piece for 30 seconds so that it began to be combusted, and the time of residual flaming after removal of the flame was measured. When the time of residual flame is 15 seconds or less, the sample is considered as passing, and samples exceeding 15 seconds were rejected.

### Wear resistance:

The wear resistance was measured by a blade reciprocation method.

A test piece was made by cutting the coated electric wire to a length of 750mm. A blade was reciprocated over a length of 10mm to the axial direction on the surface of the coating material of the test piece which was fixed on a stand at room temperature (25°C), and the coating material was worn. The number of reciprocation cycles after which the blade reached the conductor was measured when the blade was reciprocated at a load of 7N and a speed of 50 cycles per minutes.

Then, the test piece was moved by 100mm, rotated by 90 degree in a clockwise direction, and the measurement was repeated. The measurement was repeated 3 times for the same test piece, and those for which the minimum value was 150 cycles or more were referred to as passing.

### Tensile strength and elongation:

A test piece (a tubular article of only the wire covering material) was made by cutting the coated electrical wire to a length of 150mm and removing its conductor. Then, lines were marked at a central portion 50 mm apart. Then, with both ends of the test piece installed in the chucks of a tensile tester at room temperature (23±5°C), the test piece was stretched at a tensile speed of 200mm/min., and the load at break of the test piece and the distance between the mark lines at break were measured. A sample having a tensile strength of 15.7MPa or more and an elongation of 125% or more was referred to as passing.

Flexibility was evaluated by touch feeling when the electric wire was bent.

Processability was evaluated by the presence or absence of whisker formation when the terminal of the electric wire was peeled. Those having no whiskers were referred to as passing.

The results are shown in Tables 1 to 8. The amounts of the components in the Tables are parts by weight.

**Table 1**

| | Example 2 | Example 3 | Example 4 | Example 5 | Example 6 | Comparative Example 2 |
|---|---|---|---|---|---|---|
| Block copolymer PP | 60 | 97 | 80 | 90 | 80 | 100 |
| MAH-EVA | 40 | 3 | 20 | 10 | 20 | - |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 181 |
| Tensile elongation (%) | 500< | 500< | 500< | 180 | 500< | 500< |
| Tensile strength (MPa) | 26 | 34 | 36 | 21 | 35 | 34 |
| Flame resistance | Pass | Pass | Pass | Pass | Pass | Pass |
| Wear resistance (cycle) | 300 | 1200 | 750 | 200 | 600 | 3000 |
| Flexibility | Good | Good | Good | Good | Good | Bad |
| Processability | Pass | Pass | Pass | Pass | Pass | Reject |

**Table 2**

| | Example 7 | Example 8 | Example 9 | Example 10 | Example 11 | Comparative Example 2 |
|---|---|---|---|---|---|---|
| Block copolymer PP | 60 | 97 | 80 | 90 | 80 | 100 |
| MAH-EEA | 40 | 3 | 20 | 10 | 20 | - |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 181 |
| Tensile elongation (%) | 500< | 500< | 500< | 180 | 500< | 500< |
| Tensile strength (MPa) | 23 | 27 | 30 | 19 | 32 | 34 |
| Flame resistance | Pass | Pass | Pass | Pass | Pass | Pass |
| Wear resistance (cycle) | 280 | 1100 | 650 | 200 | 500 | 500 |
| Flexibility | Good | Good | Good | Good | Good | Bad |
| Processability | Pass | Pass | Pass | Pass | Pass | Reject |

**Table 3**

| | Example 12 | Example 13 | Example 14 | Example 15 | Example 16 | Comparative Example 3 |
|---|---|---|---|---|---|---|
| Block copolymer PP | 60 | 97 | 80 | 90 | 80 | 80 |
| MAH-EPR | 40 | 3 | 20 | 10 | 20 | - |
| EPR ¹⁾ | - | - | - | - | - | 20 |
| Magnesium hydroxide A | 70 | 90 | - | - | 90 | 90 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 191 |
| Tensile elongation (%) | 500< | 500< | 500< | 160 | 500< | 500< |
| Tensile strength (MPa) | 24 | 27 | 25 | 19 | 28 | 2 |
| Flame resistance | Pass | Pass | Pass | Pass | Pass | Pass |
| Wear resistance (cycle) | 220 | 900 | 700 | 200 | 400 | 70 |
| Flexibility | Good | Good | Good | Good | Good | Bad |
| Processability | Pass | Pass | Pass | Pass | Pass | Reject |

| | | | | | | |
|---|---|---|---|---|---|---|
| 1) EPR: an ethylene-propylene rubber (EP02P manufactured by JSR Corporation: density - 0.86; Shore A hardness 55; MFR 3.2 g/10 min. (190°C, a load of 2.16kg)). | | | | | | |

**Table 4**

| | Example 17 | Example 18 | Example 19 | Example 20 | Example 21 | Comparative Example 2 |
|---|---|---|---|---|---|---|
| Block copolymer PP | 60 | 97 | 80 | 90 | 80 | 100 |
| MAH-LDPE | 40 | 3 | 20 | 10 | 20 | - |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 181 |
| Tensile elongation (%) | 500< | 500< | 500< | 180 | 500< | 500< |
| Tensile strength (MPa) | 25 | 30 | 31 | 18 | 25 | 34 |
| Flame-resistance | Pass | Pass | Pass | Pass | Pass | Pass |
| Wear resistance (cycle) | 200 | 1250 | 700 | 250 | 600 | 3000 |
| Flexibility | Good | Good | Good | Good | Good | Bad |
| Processability | Pass | Pass | Pass | Pass | Pass | Reject |

**Table 5**

| | Example 22 | Example 23 | Example 24 | Example 25 | Example 26 | Comparative Example 2 |
|---|---|---|---|---|---|---|
| Block copolymer PP | 60 | 97 | 80 | 90 | 80 | 100 |
| MAH-LLDPE | 40 | 3 | 20 | 10 | 20 | - |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 181 |
| Tensile elongation (%) | 500< | 500< | 500< | 60 | 500< | 500< |
| Tensile strength (MPa) | 27 | 32 | 33 | 20 | 26 | 34 |
| Flame resistance | Pass | Pass | Pass | Pass | Pass | Pass |
| Wear resistance (cycle) | 240 | 1300 | 750 | 300 | 700 | 3000 |
| Flexibility | Good | Good | Good | Good | Good | Bad |
| Processability | Pass | Pass | Pass | Pass | Pass | Reject |

**Table 6**

| | Example 27 | Example 28 | Example 29 | Example 30 | Example 31 | Comparative Example 2 |
|---|---|---|---|---|---|---|
| Block copolymer PP | 60 | 97 | 80 | 90 | 80 | 100 |
| MAH-PP/EPR | 40 | 3 | 20 | 10 | 20 | - |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 181 |
| Tensile elongation (%) | 500< | 500< | 500< | 200 | 500< | 500< |
| Tensile strength (MPa) | 23 | 27 | 26 | 25 | 30 | 34 |
| Flame resistance | Pass | Pass | Pass | Pass | Pass | Pass |
| Wear resistance (cycle) | 200 | 1200 | 1800 | 210 | 1800 | 3000 |
| Flexibility | Good | Good | Good | Good | Good | Bad |
| Processability | Pass | Pass | Pass | Pass | Pass | Reject |

**Table 7**

| | Example 32 | Example 33 | Example 34 | Example 35 | Example 36 | Comparative Example 4 |
|---|---|---|---|---|---|---|
| Block copolymer PP | 60 | 97 | 80 | 90 | 80 | 80 |
| MAH-HSBR | 40 | 3 | 20 | 10 | 20 | - |
| HSBR ²⁾ | - | - | - | - | - | 20 |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 191 |
| Tensile elongation (%) | 300< | 500< | 500< | 170 | 500< | 500< |
| Tensile strength (MPa) | 27 | 30 | 31 | 24 | 30 | 34 |
| Flame resistance | Pass | Pass | Pass | Pass | Pass | Pass |
| Wear resistance (cycle) | 400 | 1500 | 2500 | 260 | 1800 | 110 |
| Flexibility | Good | Good | Good | Good | Good | Bad |
| Processability | Pass | Pass | Pass | Pass | Pass | Reject |

| | | | | | | |
|---|---|---|---|---|---|---|
| 2) HSBR: a hydrogenated styrene-butadiene rubber (DYNARON 1320P manufactured by JSR Corporation; density = 0.89; MFR 3.5 g/10 min. (230°C, a load of 2.16kg)). | | | | | | |

**Table 8**

| | Example 37 | Example 38 | Example 39 | Example 40 | Example 41 | Comparative Example 5 |
|---|---|---|---|---|---|---|
| Block copolymer PP | 60 | 97 | 80 | 90 | 80 | 80 |
| MAH-SEPS | 40 | 3 | 20 | 10 | 20 | - |
| SEPS ³⁾ | - | - | - | - | - | 20 |
| Magnesium hydroxide A | 70 | 90 | - | - | 90 | 80 |
| Magnesium hydroxide B | - | - | 30 | 200 | - | - |
| Antioxidant | 1 | 1 | 1 | 1 | 1 | 1 |
| Total | 171 | 191 | 131 | 301 | 191 | 191 |
| Tensile elongation (%) | 250 | 500< | 500< | 170 | 500< | 700 |
| Tensile strength (MPa) | 25 | 28 | 26 | 27 | 28 | 27 |
| Flame resistance | Pass | Pass | Pass | Pass | Pass | Pass |
| Wear resistance (cycle) | 400 | 1300 | 1200 | 260 | 1700 | 90 |
| Flexibility | Good | Good | Good | Good | Good | Good |
| Processability | Pass | Pass | Pass | Pass | Pass | Pass |

| | | | | | | |
|---|---|---|---|---|---|---|
| 3) SEPS: a hydrogenated styrene-isoprene copolymer; density = 0.89; MFR 4 g/10 min. (230°C, a load of 2.16kg)). | | | | | | |

### Examples 42 to 51

In Examples 42 to 46 of the present invention, the following components were kneaded at the ratios shown in Table 9 to prepare resin compositions:-
PP: the propylene-ethylene block copolymer RB610A used in Example 1,
MAH-SEBS: the maleic anhydride-modified hydrogenated styrene-butadiene-styrene copolymer TUFTEC M1913 used in Example 1
magnesium hydroxides A and B, as above.
an ageing resister (Tominox TT, as above.

Using an extrusion molding machine, each composition was applied at a thickness of 0.28mm to a conductor (seven soft copper wires twisted together and circularly compressed to give a smooth peripheral surface) having a sectional area of 0.5mm² to prepare an electrical wire. The die nipples used in the extrusion molding were of diameter 1.40mm and 0.88 mm. The extrusion temperature of the die was 210 to 230°C. The extrusion temperature of the cylinder was 200 to 240°C. The linear speed was 50m/minute.

As further Examples 47 to 51 of the invention, the same components as used in Examples 42 to 46 were kneaded at the ratios shown in Table 3 to prepare compositions selected to be suitable for use in an electrical wire having a small diameter. Using an extrusion molding machine, the composition was applied at a thickness of 0.20mm to a conductor (seven soft copper wires twisted together and circularly compressed to give a smooth peripheral surface) having a sectional area of 0.13mm² to prepare the covered wire. The die nipples used in the extrusion molding had diameters of 0.50mm and 0.90 mm. The extrusion temperature of the die was 210 to 230°C. The extrusion temperature of the cylinder was 200 to 240°C. The linear speed was 50m/minute.

The covered electrical wires of the examples were tested to examine flame resistance (fire resistance), wear resistance, tensile strength, tensile elongation, flexibility, and processability, as described below.

### Flame Resistance:

A flame resistance test was conducted in accordance with JASO D611-94 of Japanese Automobile Standards Organisation, as described above.

### Wear Resistance:

In accordance with JASO D611-94, a wear resistance test was conducted as described above. In the case of Examples 42 to 46, specimens for which the blade reciprocated more than 150 times were regarded as successful. In the case of Examples 47 to 51, specimens for which the blade reciprocated more than 100 times were admitted as successful.

### Tensile Strength and Tensile Elongation:

In accordance with JASO D611-94, tensile strength and tensile elongation tests were conducted as described above.

### Flexibility:

Specimens which gave a good hand feeling when they were bent by hand were admitted as successful. Processability:
A part of the resin composition disposed at the end of each covered wire was peeled off from the conductor to check whether a whisker was formed. Specimens on which no whisker was formed were admitted as successful.
Tables 9 and 10 show the components (in parts by weight) of each resin composition and the evaluated results for each electrical wire.

**Table 9**

| | | | | | |
|---|---|---|---|---|---|
| Example No. | 42 | 43 | 44 | 45 | 46 |
| Block copolymer PP | 60 | 97 | 80 | 90 | 80 |
| MAH-SEBS | 40 | 3 | 20 | 10 | 20 |
| Magnesium hydroxide A | 70 | 90 | - | - | 90 |
| Magnesium hydroxide B | - | - | 50 | 200 | - |
| Age resister | 1 | 1 | 1 | 1 | 1 |
| Total (parts by weight) | 171 | 191 | 151 | 301 | 191 |
| Fire resistance | Pass | Pass | Pass | Pass | Pass |
| Wear resistance (reciprocation number of blade) | 500 | 1800 | 4000 | 300 | 2000 |
| Tensile strength (Mpa) | 28 | 31 | 34 | 23 | 33 |
| Tensile elongation (%) | 200 | 420 | 520 | 160 | 320 |
| Flexibility | Good | Good | Good | Good | Good |
| Processability | Pass | Pass | Pass | Pass | Pass |

**Table 10**

| | | | | | |
|---|---|---|---|---|---|
| Example No. | 47 | 48 | 49 | 50 | 51 |
| Block copolymer PP | 95 | 90 | 80 | 65 | 80 |
| MAH-SEBS | 5 | 10 | 20 | 35 | 20 |
| Magnesium hydroxide B | 120 | 150 | 200 | 160 | 100 |
| Age resister | 1 | 1 | 1 | 1 | 1 |
| Total (parts by weight) | 221 | 251 | 301 | 261 | 201 |
| Fire resistance | Pass | Pass | Pass | Pass | Pass |
| Wear resistance (reciprocation number of blade) | Over 500 | Over 500 | Over 500 | 180 | Over 500 |
| Tensile strength (Mpa) | 32 | 30 | 32 | 30 | 29 |
| Tensile elongation (%) | 260 | 220 | 210 | 250 | 265 |
| Flexibility | Good | Good | Good | Good | Good |
| Processability | Pass | Pass | Pass | Pass | Pass |

The coated wire of each of the Examples 42 to 51 of the present invention was satisfactory in fire resistance, wear resistance, tensile strength, tensile elongation, flexibility and processability. In particular, the resin composition of each of the Examples 44 and 46 shown in Table 9 had preferable mechanical strength properties such as wear resistance, tensile strength and tensile elongation and a good balance between these characteristics. Each of these compositions contained 70 to 90 parts by weight of the propylene resin and 10 to 30 parts by weight of the styrene thermoplastic elastomer modified with the unsaturated carboxylic acid or its derivative and 50 to 150 parts by weight of the metal hydroxide per 100 parts by weight of the mixture.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An electrical wire having a conductor and an electrically insulating covering on the conductor,
wherein the covering is a resin composition comprising a first polymer, at least one second polymer and a filler in the form of filler particles, wherein said first polymer has a higher bonding affinity to said filler particles than said second polymer or polymers whereby said filler particles have a surface coating of said first polymer and said surface-coated filler particles are embedded in a matrix of said second polymer or polymers.

2. An electrical wire according to claim 1, wherein said filler is an inorganic filler.

3. An electrical wire according to claim 2, wherein said inorganic filler is at least one filler material selected from carbon materials, metal oxides, metal hydroxides, metal carbonates, metal sulfates, metal silicates and metal nitrides.

4. An electrical wire according to claim 3, wherein said inorganic filler is at least one metal hydroxide.

5. An electrical wire according to any one of claims 1 to 4, wherein said filler particles have at their surface a coupling agent.

6. An electrical wire according to claim 5, wherein said surface coupling agent is selected from the group consisting of silane coupling agents, fatty acids and salts of fatty acids.

7. An electrical wire according to any one of claims 1 to 6, wherein said first polymer has a reactive functional group promoting its bonding to said filler particles.

8. An electrical wire according to claim 7, wherein said reactive functional group is selected from carboxylic acid groups, carboxylic acid anhydride groups and carboxylic acid ester groups.

9. An electrical wire according to claim 8, wherein said first polymer is selected from the group consisting of:-
acid anhydride-modified ethylene-vinyl acetate copolymers,
acid anhydride-modified ethylene-ethyl acrylate copolymers,
acid anhydride-modified ethylene-propylene rubbers,
acid anhydride-modified low density polyethylenes,
acid anhydride-modified linear low density polyethylenes,
acid anhydride-modified poly(propylene-ethylene/propylene) copolymers,
acid anhydride-modified styrene-butadiene rubbers, and
acid anhydride-modified hydrogenated styrene-butadiene rubbers.

10. An electrical wire according to any one of claims 1 to 9, wherein said at least one second polymer is selected from the group comprising:
propylene polymers,
ethylene polymers, and
ethylene/propylene copolymers.

11. A method of making an electrical wire according to any one of claims 1 to 10, comprising the steps of:
(i) forming said resin composition, and
(ii) applying said resin composition to said electrical conductor to form an electrically insulating covering thereon,
wherein said step (i) includes a mixing process selected from:-
(a) first kneading said filler particles and said first polymer to form a mixture thereof and thereafter kneading said mixture and said second polymer or polymers, and
(b) kneading said filler particles and said first and second polymers together at the same time.
